# FASCICULE DE BREVET EUROPEEN

(11) **EP 1 979 072 B1**
(45) Date de publication et mention de la délivrance du brevet: **05.05.2010**
(21) Numéro de dépôt: 06847190.3
(22) Date de dépôt: 20.12.2006
(51) Int. Cl.: B01D 53/00, F25J 3/02

(54) **PROCEDE ET SYSTEME DE CAPTURE DE DIOXYDE DE CARBONE PRESENT DANS DES FUMEES**
VERFAHREN UND VORRICHTUNG ZUR GEWINNUNG VON KOHLENDIOXID AUS DÄMPFEN
METHOD AND DEVICE FOR RECOVERING CARBON DIOXIDE FROM FUMES

(30) Priorité: 21.12.2005 FR 0513078
(43) Date de publication de la demande: 15.10.2008
(73) Titulaire: GDF SUEZ, 75008 Paris (FR)
(72) Inventeur: SAYSSET, Samuel, F-92600 Asnières sur Seine (FR); GITTON, Joëlle, F-93250 Villemomble (FR)
(74) Mandataire: Thévenet, Jean-Bruno
(86) Numéro de dépôt international: PCT/FR2006/051400
(87) Numéro de publication internationale: WO 2007/074294

(56) Documents cités:
- EP-A- 1 355 716
- WO-A-2004/080558
- WO-A-2005/082493
- US-A- 2 738 658
- US-A- 5 956 971

## Description

La présente invention a pour objet un procédé et un système de capture du dioxyde de carbone (CO₂) contenu dans des fumées ou autres effluents gazeux issus d'installations industrielles.

La capture et le stockage géologique du dioxyde de carbone offrent une opportunité de réduire les émissions de gaz à effet de serre, en complément aux efforts d'amélioration des efficacités énergétiques et d'incitation à l'utilisation des ressources non fossiles.

A ce jour, les coûts de la capture du CO₂ représentent près de trois-quart des coûts de la chaîne de la séquestration géologique du CO₂ qui inclut la capture, le transport et le stockage du CO₂.

Par ailleurs, la consommation énergétique représente environ 50% des coûts de capture.

En particulier, parmi les technologies envisageables pour la capture du CO₂, la cryogénie (ou distillation à basse température) présente l'inconvénient d'une consommation énergétique importante pour la production de frigories.

Il existe donc un besoin de rationalisation de l'opération de capture du CO₂ afin d'améliorer l'efficacité de cette opération et de réduire son coût.

Sur le plan terminologique, on utilisera dans la suite de la description le terme d'anti-sublimation pour désigner le phénomène physique de la condensation solide où un gaz change d'état pour passer directement en phase solide sans qu'il y ait eu liquéfaction, c'est-à-dire passage par l'état liquide. L'anti-sublimation constitue ainsi le phénomène physique inverse de la sublimation qui désigne le passage d'un corps directement de l'état solide à l'état gazeux sans passer par l'état liquide.

Différents procédés et systèmes de capture du CO₂ par liquéfaction ou anti-sublimation ont déjà été proposés.

Dans le cas où le dioxyde de carbone est sous une pression partielle, supérieure à 5,18 bar, il est possible d'obtenir la liquéfaction directe du CO₂ par refroidissement des fumées. Ce type de procédé présente cependant l'inconvénient de devoir disposer d'effluents sous pression ou de comprimer les fumées.

Lorsque le CO₂ est disponible à une pression partielle inférieure à 5,18 bar, comme c'est le cas pour des fumées de combustion, le refroidissement des fumées va entraîner l'anti-sublimation du CO₂. Le dioxyde de carbone solide peut être par la suite soit manipulé sous forme solide, par exemple après séparation dans un cyclone, soit sublimé avant d'être ensuite liquéfié en aval, soit encore fondu directement par simple réchauffement.

On connaît en particulier par le document EP 1 355 716 B1 et la demande de brevet WO 2004/080558 un procédé d'extraction du CO₂ des fumées par refroidissement et solidification du CO₂ à pression atmosphérique par fourniture des frigories au moyen d'une distillation fractionnée.

Toutefois, dans un certain nombre de cas, notamment pour des fumées issues de turbines à gaz ou de chaudières à gaz, la teneur en CO₂ des fumées peut être assez faible, par exemple de l'ordre de 1 à 5%, ce qui implique une température d'amorçage d'anti-sublimation à la pression atmosphérique qui peut être de l'ordre de - 110°C à - 120°C.

De plus, cette teneur en CO₂ dans les fumées diminuera d'autant plus que le taux de capture cible sera élevé.

Par ailleurs, un retard à l'antisublimation a été observé, notamment pour le CO₂ dans le cas de la formation d'un solide à partir d'une phase gazeuse à basse température et basse pression partielle. Ce phénomène se traduit par une antisublimation du composé à une température plus basse que la température donnée par la thermodynamique.

Du fait de ce phénomène, pour anti-sublimer le CO₂, il faut donc soit refroidir le composé au-delà de sa température thermodynamique d'antisublimation, ce qui revient à avoir une température de fonctionnement plus basse encore dans l'échangeur, soit augmenter la surface d'échange et ainsi multiplier les contacts entre le composé et des surfaces froides. Ces deux conditions entraînent un surcoût dans le procédé.

La présente invention vise à remédier aux inconvénients précités et à permettre d'effectuer une capture du CO₂ de façon efficace mais à moindre coût et avec des installations simplifiées et au rendement potentiellement amélioré.

Ces buts sont atteints, conformément à l'invention, grâce à un procédé de capture du dioxyde de carbone présent dans des fumées, comprenant les étapes suivantes :
a) premier refroidissement des fumées pour éliminer, par condensation, une fraction de l'eau présente dans les fumées,
b) déshydratation des fumées afin d'éliminer l'eau résiduelle,
c) deuxième refroidissement des fumées par échange de chaleur de manière à amener les fumées à une température telle que le dioxyde de carbone passe directement de l'état gazeux à l'état solide par anti-sublimation,
d) après évacuation des fumées, réchauffage, dans une enceinte fermée, du dioxyde de carbone solidifié jusqu'au point triple où apparaît une phase liquide, et
e) soutirage ou pompage du dioxyde de carbone liquide et/ou gazeux vers un réservoir isolé thermiquement,
caractérisé en ce qu'une partie du dioxyde de carbone liquide récupéré est recyclée et, après détente jusqu'à la pression atmosphérique, est réinjectée lors de l'étape de deuxième refroidissement de façon continue
ou intermittente pour être mélangée aux fumées précédemment issues de l'étape de déshydratation.

Pour combattre le retard à l'antisublimation, il est possible de favoriser la cinétique du processus d'antisublimation par l'injection de cristaux de CO₂ qui ont un rôle d'amorceur à la formation du solide. Ces fines particules solides sont des centres de nucléation sur lesquels le CO₂ gazeux va venir se solidifier. La réinjection peut se faire à l'intérieur de l'échangeur, à partir du point où la température des fumées est proche de la température théorique d'antisublimation.

La partie du dioxyde de carbone liquide récupéré, qui est recyclée, est ainsi réinjectée, lors de l'étape de deuxième refroidissement, préférentiellement sous la forme de fines particules solides, et également préférentiellement à l'intérieur même d'un échangeur de chaleur.

Selon un mode particulier de réalisation, le procédé comprend en outre une étape de pré-refroidissement des fumées avant ladite étape de premier refroidissement, l'étape de pré-refroidissement s'effectuant par échange de chaleur avec au moins l'un des fluides comprenant l'eau liquide récupérée lors des étapes de premier refroidissement et de déshydratation des fumées, et les composés incondensables des fumées récupérées après ladite étape de deuxième refroidissement.

Selon un mode particulier avantageux, le premier refroidissement des fumées, la déshydratation des fumées et le deuxième refroidissement des fumées opèrent un échange de chaleur avec les fumées à travers des boucles frigorifiques amenant des frigories obtenues par échange de chaleur avec le gaz naturel liquéfié présent dans un terminal méthanier pour être regazéifié.

Selon une caractéristique particulière, le premier refroidissement des fumées et la déshydratation des fumées opèrent un échange de chaleur avec les fumées à travers au moins une boucle frigorifique faisant intervenir de l'eau glycolée.

Selon une autre caractéristique particulière, le deuxième refroidissement des fumées opère un échange de chaleur avec les fumées à travers au moins une boucle frigorifique faisant intervenir du méthane ou de l'azote.

Dans ce cas, selon encore une autre caractéristique particulière, le deuxième refroidissement des fumées peut opérer un échange de chaleur avec les fumées à travers au moins une boucle frigorifique supplémentaire faisant intervenir de l'éthylène ou de l'éthane.

L'utilisation des frigories du GNL disponibles sur un terminal méthanier de regazéification de gaz naturel est particulièrement intéressante, puisque les frigories du GNL sont ainsi valorisées dans un souci d'optimisation industrielle et énergétique, les fumées dans lesquelles le CO₂ est à extraire constituant ainsi la source chaude pour des échangeurs à fluide intermédiaire qui permettent la regazéification du GNL stocké sous forme liquide à - 161°C sous 80 bar.

Dans le cas de proximité entre une installation industrielle émettrice de CO₂, telle qu'une centrale thermique, et d'un terminal méthanier de regazéification du GNL, il est donc tout à fait opportun d'utiliser les frigories du GNL dans l'opération de capture du CO₂ dans des fumées de combustion ou des effluents gazeux, par anti-sublimation à environ la pression atmosphérique puis fusion à une pression de quelques bar qui est obtenue par le seul réchauffement du CO₂ solide.

L'invention est applicable à toutes les fumées de centrales et d'installations thermiques (aciérie, cimenterie,...) utilisant divers combustibles fossiles (gaz naturel, charbon, fuel,...) contenant des concentrations variables de CO₂, même faibles et inférieures à 1%.

Par ailleurs, en utilisant différentes boucles frigorifiques faisant intervenir différents fluides et produisant un refroidissement étagé des fumées, il est possible de réduire de façon très significative les dimensions des canalisations de la boucle cryogénique finale faisant intervenir des frigories nobles (par exemple avec de l'azote), même si la distance entre le terminal méthanier et l'installation de capture est de plusieurs centaines de mètres ou de plusieurs kilomètres.

Le procédé selon l'invention peut présenter diverses autres caractéristiques avantageuses selon des modes de réalisation particuliers :

La déshydratation des fumées comprend une étape d'échange de chaleur avec les composés incondensables des fumées récupérées après l'étape de deuxième refroidissement.

L'étape de déshydratation des fumées est effectuée de façon discontinue avec en alternance une étape de refroidissement des fumées pour solidifier l'eau sur les parois d'un échangeur de chaleur et une étape de réchauffement de l'eau solidifiée pour permettre sa récupération sous forme liquide.

Le réchauffement de l'eau solidifiée est effectué par échange de chaleur avec des fumées avant leur refroidissement lors de l'étape de refroidissement des fumées avec solidification de l'eau.

L'étape de deuxième refroidissement des fumées pour provoquer une anti-sublimation du dioxyde de carbone et l'étape de réchauffage du dioxyde de carbone solidifié sont réalisées de façon discontinue en alternance.

L'étape de réchauffage du dioxyde de carbone solidifié jusqu'au point triple où apparaît une phase liquide pourra être réalisée par échange de chaleur avec des fumées avant leur refroidissement lors de l'étape de deuxième refroidissement des fumées.

Le procédé comprend en outre une étape de récupération des oxydes de soufre contenus dans les fumées par anti-sublimation et réchauffage jusqu'au point triple où apparaît une phase liquide des oxydes de soufre.

L'invention concerne également un système de capture du dioxyde de carbone présent dans des fumées, comprenant :
a) des premiers moyens de refroidissement des fumées comprenant au moins un échangeur de chaleur pour éliminer par condensation une fraction de l'eau présente dans les fumées,
b) des moyens de déshydratation des fumées,
c) des deuxièmes moyens de refroidissement des fumées comprenant au moins un échangeur de chaleur pour amener les fumées à une température provoquant l'anti-sublimation du dioxyde de carbone présent dans les fumées,
d) des moyens de réchauffage, dans une enceinte fermée, du dioxyde de carbone solidifié pour provoquer la fusion de celui-ci,
e) des moyens de soutirage ou de pompage du dioxyde de carbone liquide et/ou gazeux vers un réservoir isolé thermiquement,
caractérisé en ce qu'il comprend en outre des moyens de détente jusqu'à la pression atmosphérique d'une partie du dioxyde de carbone liquide récupéré, et de réinjection de cette partie de dioxyde de carbone dans les fumées au niveau desdits deuxièmes moyens de refroidissement des fumées. Le système comprend en outre de préférence des moyens pour réinjecter sous forme de fines particules solides, dans les fumées, ladite partie du dioxyde de carbone liquide récupéré.

Selon un mode particulier de réalisation, les premiers moyens de refroidissement comprennent un échangeur de chaleur entre les fumées et au moins l'un des fluides comprenant l'eau liquide récupérée dans les premiers moyens de refroidissement ou dans les moyens de déshydratation des fumées, et les composés incondensables des fumées récupérés en entrée des deuxièmes moyens de refroidissement.

Selon une application avantageuse, le système selon l'invention comprend des boucles frigorifiques utilisant des fluides caloporteurs circulant d'une part dans des échangeurs de chaleur présents dans un terminal méthanier pour assurer un échange de chaleur avec du gaz naturel liquéfié soumis à un processus de regazéification et d'autre part dans des échangeurs de chaleur disposés dans l'un au moins des premiers moyens de refroidissement, des moyens de déshydratation et des deuxièmes moyens de refroidissement pour assurer un échange de chaleur avec les fumées donnant lieu à la capture du dioxyde de carbone.

Selon une caractéristique particulière, le système comprend au moins une boucle frigorifique utilisant comme fluide caloporteur de l'eau glycolée et incluant au moins un échangeur de chaleur disposé dans les premiers moyens de refroidissement ou les moyens de déshydratation.

Selon une autre caractéristique particulière, le système comprend au moins une boucle frigorifique utilisant comme fluide caloporteur du méthane ou de l'azote et incluant au moins un échangeur de chaleur disposé dans les deuxièmes moyens de refroidissement.

Dans ce cas, selon un mode particulier de réalisation, le système peut comprendre en outre une boucle frigorifique utilisant comme fluide caloporteur de l'éthylène ou de l'éthane; et incluant au moins un échangeur de chaleur disposé dans les deuxièmes moyens de refroidissement.

Le système peut comprendre des moyens de récupération des composés incondensables des fumées à la sortie des deuxièmes moyens de refroidissement et des moyens d'échange de chaleur avec au moins les moyens de déshydratation des fumées.

Selon un mode particulier de réalisation, les moyens de déshydratation des fumées comprennent au moins des première et deuxième enceintes munies d'échangeurs de chaleur et pouvant recevoir des fumées de façon discontinue de manière à assurer chacune à tour de rôle un refroidissement des fumées avec solidification de l'eau contenue dans les fumées sur les parois de l'enceinte concernée et un réchauffement de l'eau solidifiée pour permettre une récupération de l'eau sous forme liquide.

Selon un autre aspect particulier de l'invention, les deuxièmes moyens de refroidissement des fumées et lesdits moyens de réchauffage comprennent au moins des première et deuxième enceintes munies d'échangeurs de chaleur et pouvant recevoir des fumées de façon discontinue de manière à assurer chacune à tour de rôle un refroidissement des fumées avec anti-sublimation du dioxyde de carbone qui est déposé sur les parois de l'enceinte concernée, et un réchauffement du dioxyde de carbone solidifié pour provoquer la fusion de celui-ci.

Le système peut encore comprendre des moyens de récupération d'oxydes de soufre dans les moyens de réchauffage dans une enceinte fermée.

D'autres caractéristiques et avantages de l'invention ressortiront de la description suivante de modes particuliers de réalisation, en référence aux dessins annexés, sur lesquels :
- la Figure 1 est une vue schématique d'ensemble d'un système de capture de CO₂ par anti-sublimation conformément à l'invention,
- la Figure 2 est une vue de détail montrant le principe d'une unité de déshydratation par solidification/fusion pouvant être incorporée dans le système de la Figure 1,
- la Figure 3 est une vue schématique comparant les tailles de boucles cryogéniques dans le cas de l'utilisation d'une boucle unique et dans celui de deux boucles,
- la Figure 4 montre des courbes d'équilibre gaz-liquide pour différents composés en fonction de la température et de la pression, et
- la Figure 5 est un diagramme pression-température du CO₂ montrant l'évolution du CO₂ au cours d'un procédé de capture selon l'invention.

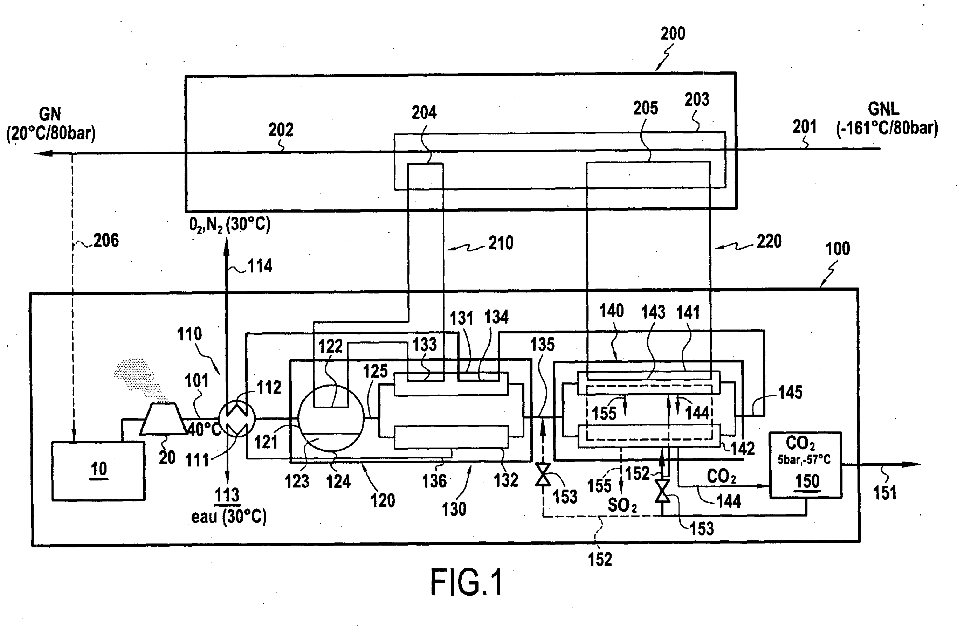

Un exemple de mise en oeuvre de la présente invention sera décrit en référence à la Figure 1.

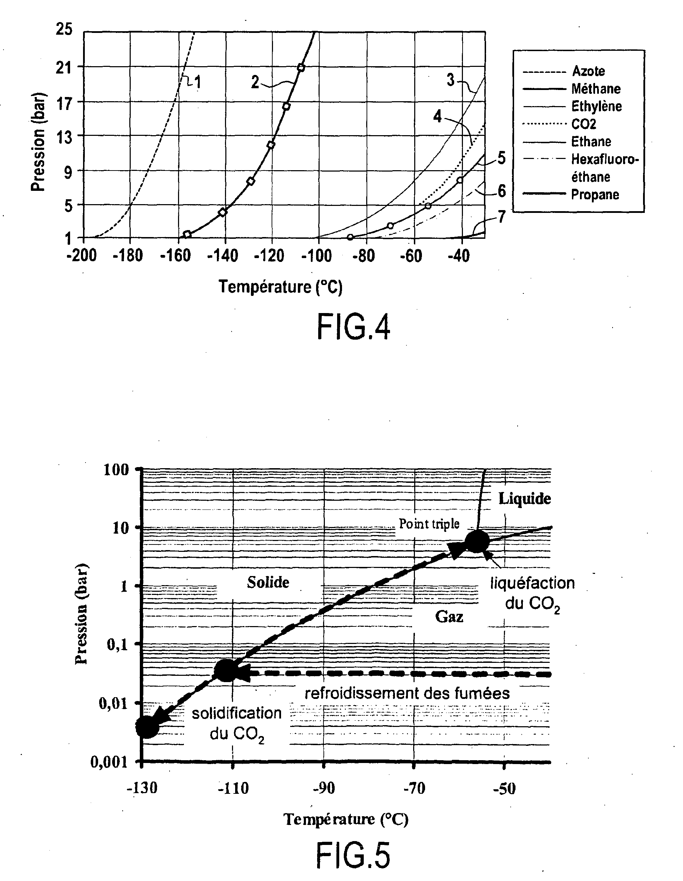

Toutefois, on pourra d'abord se reporter à la Figure 5 qui illustre le phénomène thermodynamique utilisé qui est une anti-sublimation du CO₂ suivie d'une compression/fusion obtenue par le seul réchauffement du CO₂ solide.

Comme on l'a déjà indiqué, ce phénomène est applicable à toutes les fumées de centrales et d'installations thermiques utilisant divers combustibles fossiles (gaz naturel, charbon, fuel,...) contenant des concentrations variables de CO₂ pouvant aller de moins de 1% à des concentrations de plusieurs dizaines de pourcent.

Le Tableau 1 donne à titre d'exemple la composition typique des fumées d'une turbine à gaz.

**Tableau 1- Composition des fumées de turbine à gaz**

| | N₂ | H₂O | O₂ | CO₂ |
|---|---|---|---|---|
| Composition molaire base humide (%) | 76 | 6 | 14 | 4 |
| Composition molaire base sèche (%) | 81 | - | 15 | 4 |

Comme on peut le voir, les fumées, après élimination de l'eau, contiennent environ 4% de CO₂ (pression partielle de 0,04 bar).

Ces fumées peuvent alors être refroidies dans un échangeur thermique jusqu'à la condensation du CO₂ à partir de - 110°C (voir la ligne horizontale en pointillés sur la Figure 5).

Le CO₂ solide piégé dans l'échangeur peut alors être réchauffé et évoluer jusqu'aux conditions du point triple du CO₂ où le CO₂ liquide peut être éliminé afin de déplacer l'équilibre thermodynamique en faveur de la production de CO₂ liquide (voir la courbe supérieure en pointillés sur la Figure 5).

La température de démarrage du processus d'anti-sublimation dépend de la teneur en CO₂ des fumées. Ainsi, elle varie de -78,5°C pour du CO₂ pur à pression atmosphérique à - 121,9°C pour un effluent contenant une pression partielle de 0,01 bar de CO₂ (voir le tableau 2).

**Tableau 2**

| Température de démarrage du processus d'anti-sublimation du CO₂ en fonction des teneurs en CO₂ des fumées à pression atmosphérique | | | | | | | |
|---|---|---|---|---|---|---|---|
| Teneur en CO₂ | 100 | 15 | 10 | 5 | 2 | 1 | 0,1 |
| Température d'anti-sublimation | -78,5 | -99,3 | -103,1 | -109,3 | -116,7 | -121,9 | -136,7 |
| Compositions types | | Centrale au charbon | Chaudière à gaz | | Turbine à gaz | | |

Conformément à l'invention, on procède à un recyclage d'une fraction du CO₂ liquide obtenu en sortie de procédé, par détente jusqu'à formation de fines particules solides dans le dernier échangeur de manière à créer des centres de nucléation.

Ce recyclage permet une optimisation de l'échangeur d'anti-sublimation en termes de surface d'échange et de température finale de fonctionnement.

La Figure 1 montre un exemple avantageux de mise en oeuvre de l'invention dans le cadre de la capture de fumées produites par une installation industrielle 10. Après refroidissement, par exemple dans un aéro-réfrigérant classique 20, les fumées de combustion sont disponibles à une température de l'ordre de 40°C en entrée de l'installation 110 de traitement et de capture du CO₂.

Dans l'exemple de la Figure 1, l'installation industrielle 10 est située à proximité (par exemple à une distance de l'ordre de quelques centaines de mètres à quelques kilomètres) d'un terminal méthanier 200 qui reçoit du gaz naturel liquéfié (GNL) par exemple à - 161°C sous une pression de 80 bar, sur une ligne 201. Le GNL passe à travers un échangeur de chaleur 203 qui opère un échange de chaleur entre le GNL et des fluides caloporteurs circulant dans des échangeurs 204, 205 de boucles frigorifiques 210, 220. A la sortie 202 du terminal méthanier, le gaz naturel poursuit le processus de regazéification. Ce gaz naturel regazéifié peut par exemple servir à alimenter l'installation industrielle 10, telle qu'une centrale thermique, par une ligne 206.

L'invention s'applique à la capture du CO₂ dans des fumées de combustion, mais peut aussi être appliquée à la capture du CO₂ dans d'autres effluents gazeux comme par exemple des gaz de synthèse obtenus dans le cadre de la production d'hydrogène.

L'invention permet également d'effectuer, par le même procédé d'anti-sublimation, la capture d'oxydes de soufre (SOₓ) pouvant être présents dans les fumées à côté du CO₂.

Dans l'installation de la Figure 1, les fumées servent de source chaude pour les boucles frigorifiques 210, 220 tandis que le GNL à - 161°C assure l'apport en frigories.

Le refroidissement des fumées fournies sur la ligne 101 s'opère en plusieurs étapes.

Dans un dispositif de refroidissement 120 comprenant un échangeur 122 d'une boucle frigorifique 210, par exemple à eau glycolée, les fumées de combustion sont refroidies de 40°C à 1°C pour provoquer dans l'enceinte 121 la condensation liquide (liquéfaction) d'une fraction 123 de l'eau présente dans les fumées.

L'eau condensée 123 est évacuée par une canalisation 124 et peut être par exemple renvoyée vers un échangeur 111 qui peut opérer un pré-refroidissement des fumées avant leur entrée dans le dispositif de refroidissement 120. L'eau réchauffée dans l'échangeur 111 permet de ramener la température des fumées par exemple à 30°C, et est évacuée par une ligne 113 à une température proche de la température ambiante (30°C).

Les fumées issues du dispositif de refroidissement 120 sont introduites par une ligne 125 dans un dispositif 130 de déshydratation des fumées.

La déshydratation des fumées est nécessaire pour éliminer l'eau résiduelle (environ 0,6% d'eau dans les fumées, si l'on considère que la pression de vapeur de l'eau à 1°C est de 6,6 mbar).

En effet, l'eau résiduelle peut se solidifier et bloquer l'installation par la suite et se retrouver dans le CO₂ capturé.

L'opération de déshydratation peut également être réalisée par utilisation de frigories du GNL du terminal méthanier 200, par exemple à l'aide d'un échangeur de chaleur 133 pouvant être inséré le cas échéant dans la même boucle frigorifique 210 (par exemple à eau glycolée) que l'échangeur 122.

L'eau résiduelle peut ainsi être solidifiée par exemple à - 30°C, sur les parois de l'une (131) des au moins deux enceintes 131, 132 fonctionnant de façon discontinue en alternance ("en batch").

Lorsque de l'eau est solidifiée sur les parois d'une enceinte 131, les fumées sont basculées vers l'entrée de l'autre ou de l'une des autres enceintes 132 pour provoquer de la même manière la solidification de l'eau résiduelle. Pendant ce temps, l'eau solidifiée sur les parois de la première enceinte 131 est réchauffée par exemple en utilisant la chaleur des fumées par passage dans la première enceinte 131 avant de pénétrer dans une deuxième enceinte 132 où doit alors se produire la capture de l'eau.

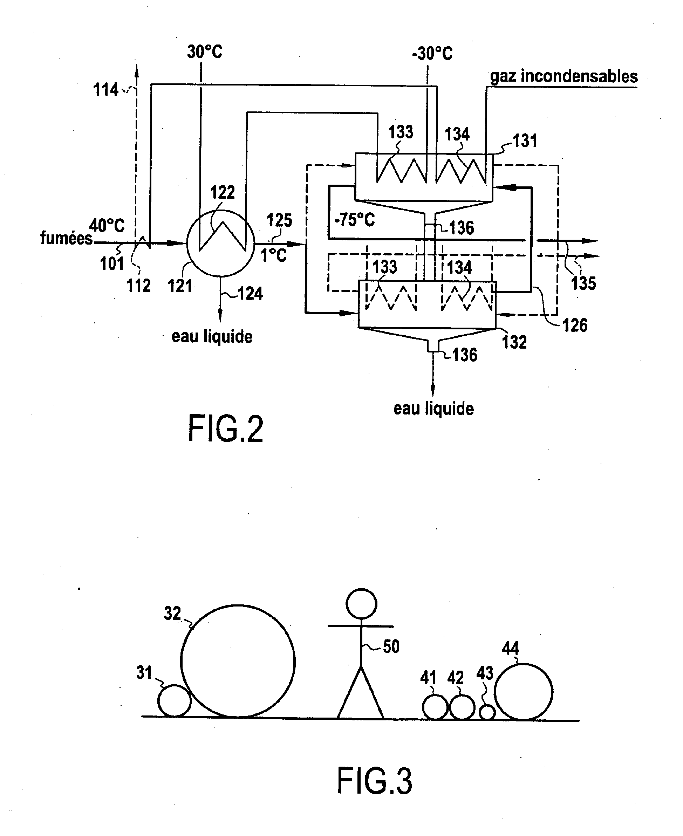

Ce fonctionnement discontinu en alternance des enceintes 131 et 132 est représenté plus en détail sur la Figure 2.

Sur la Figure 2 on voit ainsi les fumées saturées en eau à 1°C arrivant sur la ligne 125 pour pénétrer d'abord dans l'enceinte 132 (dont les échangeurs 133, 134 sont désactivés) afin de provoquer la fusion de l'eau solidifiée sur les parois de l'enceinte, et l'évacuation de l'eau liquide par une tubulure 136. Les fumées sont alors conduites à travers la canalisation 126 vers l'enceinte de capture 131 au sein de laquelle les échangeurs 133, 134 sont activés pour refroidir les fumées et capturer l'eau résiduelle qui se solidifie sur les parois de l'enceinte 131. Les fumées sortent alors par une canalisation 135 pour être conduites vers l'étage de capture de CO₂. Lors de l'alternance suivante, les fumées arrivant par la conduite 125 sont basculées sur le trajet en pointillés sur la Figure 2 pour pénétrer d'abord dans l'enceinte 131 afin de provoquer la fusion de l'eau et son évacuation par la tubulure 136, puis les fumées sont introduites dans l'enceinte 132 dans laquelle les échangeurs de chaleur 133, 134 sont alors activés, pour provoquer la solidification de l'eau résiduelle. Les fumées sortant de l'enceinte 132 sont alors transférées par la conduite 135 vers l'étage suivant de capture de CO₂.

Dans les enceintes 131, 132, on peut utiliser un échangeur de chaleur 134, tel que celui précédemment décrit, qui fait partie d'une boucle frigorifique d'échange de chaleur par exemple avec le GNL d'un terminal méthanier. On peut également mettre en oeuvre un échangeur de chaleur 134 dans lequel circulent des gaz incondensables (azote, oxygène,...) récupérés dans les fumées à la sortie 145 du processus de capture de CO₂.

Les gaz incondensables peuvent également être ensuite transférés dans un échangeur de chaleur 112 assurant, comme l'échangeur de chaleur 111, un pré-refroidissement et une élimination de l'eau condensée dans un étage 110 situé en amont du dispositif de refroidissement 120 et de déshydratation 130. Les gaz incondensables résiduels (O₂, N₂,...) peuvent alors être rejetés dans l'atmosphère par une ligne 114 à une température de l'ordre de 30°C (Figures 1 et 2).

L'eau liquide évacuée par les tubulures 136 peut, comme l'eau récupérée par la conduite 124, être utilisée pour assurer un pré-refroidissement dans l'échangeur 111.

Les fumées présentes dans la canalisation 135 en sortie de l'étage 130 de déshydratation peuvent présenter une température de l'ordre de - 30°C et sont introduites dans un autre dispositif de refroidissement 140 qui peut comprendre un ou plusieurs échangeurs de chaleur 143 faisant partie de boucles frigorifiques telle que la boucle 220 amenant des frigories issues du GNL présent dans le terminal méthanier 200.

Le dispositif de refroidissement 140 comprend au moins deux enceintes 141, 142 comportant chacune un échangeur de chaleur 143 faisant partie de la boucle frigorifique 220 et des moyens 144, 155 de soutirage ou de pompage du CO₂ liquide et/ou gazeux et le cas échéant également de dioxyde de soufre.

Les enceintes 141, 142 fonctionnent de façon discontinue en alternance à tour de rôle (fonctionnement en "batch") pour capturer par anti-sublimation le CO₂ (respectivement SO₂) puis provoquer la fusion de celui-ci. Le fonctionnement est similaire à ce qui a été expliqué en référence à la Figure 2 pour la capture de l'eau.

Ainsi, après le dépôt du CO₂ (voire de SO₂) sur les parois de l'enceinte 141 dont l'échangeur de chaleur 143 est actif, les fumées sont basculées vers l'enceinte 142. Dans l'enceinte 141, l'échangeur de chaleur 143 est désactivé et l'énergie des fumées peut être utilisée pour faire remonter la température du CO₂ solide qui se réchauffe d'une température de par exemple - 130°C à une température d'environ -56,6°C avec une pression partielle en CO₂ de 5,18 bar, ce qui correspond au point triple où les phases liquide et gazeuse apparaissent et coexistent simultanément (voir Figure 5). Afin de déplacer l'équilibre solide-liquide-gaz, il suffit de soutirer ou pomper le CO₂ par une canalisation 144 vers un réservoir 150 isolé thermiquement, à partir duquel le CO₂ peut être prélevé par une canalisation 151 pour être transporté vers un lieu de stockage temporaire, avant d'être transporté et injecté, par exemple dans un ancien gisement pétrolier. Pendant la phase de fusion du CO₂ par exemple dans l'enceinte 141, les fumées traversant l'autre enceinte 142 conduisent au dépôt de CO₂ par anti-sublimation dans cette enceinte 142. Ce CO₂ solidifié pourra être fondu lors du cycle suivant de réchauffage dans l'enceinte 142 pendant que le phénomène de capture du CO₂ a lieu dans l'enceinte 141. Le processus de capture par anti-sublimation puis récupération par simple fusion du dioxyde de soufre présent dans les fumées peut être tout à fait similaire à ce qui a été décrit en référence au CO₂.

Comme on l'a déjà indiqué plus haut, une caractéristique importante de l'invention réside dans le fait qu'une fraction du CO₂ liquide obtenu sur la ligne 144 en sortie du dispositif de refroidissement 140 et récupéré dans le réservoir 150 est recyclé par une conduite 152 munie d'une vanne 153 soit (traits pointillés) vers la canalisation 135 d'amenée des fumées déshydratées à l'entrée du dispositif de refroidissement 140, soit de préférence (traits continus) directement dans les enceintes 141, 142 afin de créer des centres de nucléation pour l'anti-sublimation du CO₂.

De la sorte, il est possible d'optimiser le dimensionnement de la boucle frigorifique 220 fonctionnant à l'azote ou au méthane, le dimensionnement d'une boucle optionnelle supplémentaire à l'éthylène ou à l'éthane ainsi que le dimensionnement des échangeurs d'anti-sublimation 142 et 141 en termes de surface d'échange ou de taux de capture du CO₂.

La Figure 4 donne les courbes d'équilibre gaz/liquide entre -200 et -30°C de quelques composés utilisables comme fluides caloporteurs dans les boucles frigorifiques 210, 220. Ces composés sont l'azote, le méthane, l'éthylène, le CO₂; l'éthane, l'hexafluoroéthane, le propane (courbes référencées 1 à 7 respectivement).

Grâce à l'utilisation de différentes boucles frigorifiques 210, 220 mettant en oeuvre différents fluides caloporteurs et conduisant à un refroidissement étagé, il est possible de réduire la taille de la boucle cryogénique utilisant l'azote.

Ainsi, on a représenté sur la Figure 3, par rapport à la taille d'un individu moyen 50, la taille d'une boucle cryogénique unique à l'azote qui utiliserait une canalisation 31 pour l'azote liquide et une canalisation 32 pour le retour de l'azote gazeux.

Avec une hypothèse d'une énergie nécessaire à la capture de 0,600 kWh/kg de CO₂ (ce qui correspond au cas d'effluents de turbine à gaz avec récupération de l'énergie de l'eau et des éléments incondensables), la puissance frigorifique nécessaire pour la capture de 320 t de CO₂ à l'heure est de 192 MW. Sur la base d'une boucle d'azote à 25 bar (- 155°C côté liquide et 30°C côté gaz) le débit d'azote à transporter est de plus de un million de Nm³/h soit un diamètre de canalisation de 0,40 m pour la canalisation 31 côté liquide si la vitesse du liquide est de 10 m/s (ou de 0,70 m si la vitesse du liquide est de par exemple 3 m/s) et un diamètre de canalisation de 1,60 m pour la canalisation 32 côté gaz (10 m/s). La taille d'une telle boucle à azote peut poser des problèmes en termes d'opération (fluide cryogénique à maintenir en froid) et en termes d'investissement, notamment sur plusieurs kilomètres.

Au contraire, dans le cas où l'on utilise d'une part une boucle frigorifique par exemple à eau glycolée 210 comprenant des canalisations 41, 42 d'aller-retour et d'autre part une boucle frigorifique à azote 220 comprenant une canalisation 43 côté liquide et une canalisation 44 côté gaz, les dimensions des différentes canalisations, y compris la canalisation 44, peuvent être réduites.

Comme on l'a indiqué en référence aux Figures 1 et 2, la déshydratation des fumées est réalisée par un refroidissement des fumées de 40°C à 1°C avec élimination de l'eau libre, puis à des températures suffisamment basses pour atteindre les teneurs en eau souhaitées. Dans l'exemple décrit, l'opération de déshydratation est réalisée par utilisation d'une boucle frigorifique 210 à eau glycolée qui, en fonction de la teneur en glycol (éthylène glycol, propylène glycol), peut permettre d'atteindre -40°C.

Le tableau 3 donne la teneur en eau des fumées et du CO₂ capturé en fonction de la température de refroidissement.

**Tableau 3**

| Teneur en eau des fumées et du CO₂ capturé en fonction de la température de refroidissement et pour un taux de capture de 100% | | |
|---|---|---|
| Température de refroidissement des fumées (°C) | Teneur en eau des fumées (ppm) | Teneur en eau du CO₂ capturé (ppm) |
| - 30 | 490 | 1,3 % |
| - 40 | 180 | 0,5% |
| - 50 | 60 | 1650 |
| - 60 | 18 | 490 |
| - 70 | 5 | 130 |
| - 80 | 1 | 30 |
| - 90 | 0,1 | 5 |

Avec un point de rosée à -30°C, la teneur en eau des fumées est ainsi de 490 ppm, soit environ 5g d'eau/kg de CO₂ capturé (1,3%).

Afin d'éviter les problèmes de corrosion et de formation d'hydrates lors du transport et de l'injection dans le stockage, on réalise de préférence une déshydratation plus poussée des fumées afin d'obtenir des teneurs aussi faibles que 50 ppm d'eau dans le CO₂.

Pour cela, on peut refroidir les fumées à environ -75°C avec l'utilisation d'une boucle frigorifique supplémentaire sur la partie déshydratation des fumées.

Cette boucle frigorifique supplémentaire pourrait être une boucle utilisant des frigories du GNL et un fluide caloporteur tel que le méthane ou l'éthylène.

Toutefois, cette boucle supplémentaire est de préférence, comme représenté sur la Figure 1, une boucle utilisant les gaz incondensables disponibles à la sortie 145 de l'étage d'anti-sublimation, pour poursuivre dans l'échangeur 134 le refroidissement des fumées et obtenir une température de l'ordre de -75°C à la sortie 135 du dispositif de déshydratation.

Le tableau 4 donne des éléments chiffrés pour un exemple d'installation de déshydratation de fumées dans un cycle combiné au gaz naturel de 800 MW, avec une puissance frigorifique de 164MW pour réaliser la déshydratation, répartie entre l'échangeur 122 (99 MW) et l'échangeur 133 (65 MW). Sur la base d'une boucle d'eau glycolée à 1 bar (-40°C côté froid et 30°C côté chaud), le débit d'eau à transporter est d'environ 2500 m³/h soit un diamètre de l'ordre de 0,30 m pour les canalisations 41 et 42 de la Figure 3.

Le tableau 4 donne la température, la pression et le débit en azote, oxygène, argon, CO₂ et eau aux différents points suivants de l'installation de la Figure 1 :
- 1 :: canalisation 101 d'entrée dans le pré-refroidisseur 110,
- 2 :: canalisation d'entrée dans le refroidisseur 120,
- 3 :: canalisation 125 d'entrée dans le déshydrateur 130,
- 4 :: canalisation 135 de sortie du déshydrateur 130,
- 5 :: canalisation de transfert des gaz incondensables, à l'entrée de l'échangeur 134,
- 6 :: canalisation de transfert des gaz incondensables à l'entrée de l'échangeur 112,
- 7 :: canalisation d'évacuation des gaz incondensables à la sortie 114 de l'échangeur 112.

**Tableau 4**

| | 1 | 2 | 3 | 4 | 5 | 6 | 7 |
|---|---|---|---|---|---|---|---|
| Température | 40 | 24 | 1 | -75 | -90 | -40 | 30 |
| Pression | 1 | 1 | 1 | 1 | 1 | 1 | 1 |
| Azote (t/h) | 4432 | 4432 | 4432 | 4432 | 4432 | 4432 | 4432 |
| Oxygène (t/h) | 9189 | 9189 | 9189 | 9189 | 9189 | 9189 | 9189 |
| Argon (t/h) | 75 | 75 | 75 | 75 | 75 | 75 | 75 |
| CO₂ (t/h) | 320 | 320 | 320 | 320 | 0 | 0 | 0 |
| Eau (t/h) | 233 | 233 | 23 | 2 | 0 | 0 | 0 |

La puissance frigorifique nécessaire pour le refroidissement des fumées de -75°C à -90°C et l'anti-sublimation du CO₂ (passage de l'état vapeur à pression atmosphérique, -75°C à l'état liquide au point triple) est de 50 MW (dont 21 MW pour le refroidissement des fumées de -75°C à - 90°C et 29MW pour l'anti-sublimation du CO₂). Sur la base d'une boucle d'azote à 25 bar (-155°C côté liquide et 30°C côté gaz), le diamètre de canalisation sera de 0,20 m pour la canalisation 43 côté liquide si la vitesse du liquide est de 10 m/s (ou de 0,30 m si la vitesse du liquide est de 3 m/s) et de 0,80 m pour la canalisation 44 côté gaz (10 m/s) (Figure 3).

Les dimensions d'une telle boucle frigorifique à azote sont donc tout à fait acceptables pour une mise en oeuvre pratique aisée.

## Revendications

1. Procédé de capture du dioxyde de carbone présent dans des fumées, comprenant les étapes suivantes :
a) premier refroidissement des fumées pour éliminer, par condensation, une fraction de l'eau présente dans les fumées,
b) déshydratation des fumées afin d'éliminer l'eau résiduelle,
c) deuxième refroidissement des fumées par échange de chaleur de manière à amener les fumées à une température telle que le dioxyde de carbone passe directement de l'état gazeux à l'état solide par anti-sublimation,
d) après évacuation des fumées, réchauffage, dans une enceinte fermée, du dioxyde de carbone solidifié jusqu'au point triple où apparaît une phase liquide, et
e) soutirage ou pompage du dioxyde de carbone liquide et/ou gazeux vers un réservoir isolé thermiquement,
**caractérisé en ce qu'**une partie du dioxyde de carbone liquide récupéré est recyclée et, après détente jusqu'à la pression atmosphérique, est réinjectée lors de l'étape de deuxième refroidissement de façon continue ou intermittente pour être mélangée aux fumées précédemment issues de l'étape de déshydratation.

2. Procédé selon la revendication 1, **caractérisé en ce que** la partie du dioxyde de carbone liquide récupéré, qui est recyclée, est réinjectée lors de l'étape de deuxième refroidissement sous la forme de fines particules solides.

3. Procédé selon la revendication 1 ou la revendication 2, **caractérisé en ce que** la partie du dioxyde de carbone liquide récupérée, qui est recyclée, est injectée lors de l'étape de deuxième refroidissement à l'intérieur même d'un échangeur de chaleur.

4. Procédé selon l'une quelconque des revendications 1 à 3, **caractérisé en ce qu'**il comprend en outre une étape de pré-refroidissement des fumées avant ladite étape de premier refroidissement, l'étape de pré-refroidissement s'effectuant par échange de chaleur avec au moins l'un des fluides comprenant l'eau liquide récupérée lors des étapes de premier refroidissement et de déshydratation des fumées, et les composés incondensables des fumées récupérées après ladite étape de deuxième refroidissement.

5. Procédé selon l'une quelconque des revendications 1 à 4, **caractérisé en ce que** le premier refroidissement des fumées, la déshydratation des fumées et le deuxième refroidissement des fumées opèrent un échange de chaleur avec les fumées à travers des boucles frigorifiques amenant des frigories obtenues par échange de chaleur avec le gaz naturel liquéfié présent dans un terminal méthanier pour être regazéifié.

6. Procédé selon la revendication 5, **caractérisé en ce que** le premier refroidissement des fumées et la déshydratation des fumées opèrent un échange de chaleur avec les fumées à travers au moins une boucle frigorifique faisant intervenir de l'eau glycolée.

7. Procédé selon la revendication 5 ou la revendication 6, **caractérisé en ce que** le deuxième refroidissement des fumées opère un échange de chaleur avec les fumées à travers au moins une boucle frigorifique faisant intervenir du méthane ou de l'azote.

8. Procédé selon la revendication 7, **caractérisé en ce que** le deuxième refroidissement des fumées opère un échange de chaleur avec les fumées à travers au moins une boucle frigorifique supplémentaire faisant intervenir de l'éthylène ou de l'éthane.

9. Procédé selon l'une quelconque des revendications 1 à 8, **caractérisé en ce que** la déshydratation des fumées comprend une étape d'échange de chaleur avec les composés incondensables des fumées récupérées après l'étape de deuxième refroidissement.

10. Procédé selon l'une quelconque des revendications 1 à 9, **caractérisé en ce que** l'étape de déshydratation des fumées est effectuée de façon discontinue avec en alternance une étape de refroidissement des fumées pour solidifier l'eau sur les parois d'un échangeur de chaleur et une étape de réchauffement de l'eau solidifiée pour permettre sa récupération sous forme liquide.

11. Procédé selon la revendication 10, **caractérisé en ce que** le réchauffement de l'eau solidifiée est effectué par échange de chaleur avec des fumées avant leur refroidissement lors de l'étape de refroidissement des fumées avec solidification de l'eau.

12. Procédé selon l'une quelconque des revendications 1 à 11, **caractérisé en ce que** l'étape de deuxième refroidissement des fumées pour provoquer une anti-sublimation du dioxyde de carbone et l'étape de réchauffage du dioxyde de carbone solidifié sont réalisées de façon discontinue en alternance.

13. Procédé selon la revendication 12, **caractérisé en ce que** l'étape de réchauffage du dioxyde de carbone solidifié jusqu'au point triple où apparaît une phase liquide est réalisée par échange de chaleur avec des fumées avant leur refroidissement lors de l'étape de deuxième refroidissement des fumées.

14. Procédé selon l'une quelconque des revendications 1 à 13, **caractérisé en ce qu'**il comprend en outre une étape de récupération des oxydes de soufre contenus dans les fumées par anti-sublimation et réchauffage jusqu'au point triple où apparaît une phase liquide des oxydes de soufre.

15. Système de capture du dioxyde de carbone présent dans des fumées, comprenant :
a) des premiers moyens (110, 120) de refroidissement des fumées comprenant au moins un échangeur de chaleur (122) pour éliminer par condensation une fraction de l'eau présente dans les fumées,
b) des moyens (130) de déshydratation des fumées,
c) des deuxièmes moyens (140) de refroidissement des fumées comprenant au moins un échangeur de chaleur (143) pour amener les fumées à une température provoquant l'anti-sublimation du dioxyde de carbone présent dans les fumées,
d) des moyens (141, 142) de réchauffage, dans une enceinte fermée, du dioxyde de carbone solidifié pour provoquer la fusion de celui-ci,
e) des moyens (144) de soutirage ou de pompage du dioxyde de carbone liquide et/ou gazeux vers un réservoir (150) isolé thermiquement,
**caractérisé en ce qu'**il comprend en outre des moyens (152, 153) de détente jusqu'à la pression atmosphérique d'une partie du dioxyde de carbone liquide récupéré, et de réinjection de cette partie de dioxyde de carbone dans les fumées au niveau desdits deuxièmes moyens (140) de refroidissement des fumées.

16. Système selon la revendication 15, **caractérisé en ce qu'**il comprend des moyens pour réinjecter, sous forme de fines particules solides dans les fumées, ladite partie du dioxyde de carbone liquide récupéré.

17. Système selon la revendication 15 ou la revendication 16, **caractérisé en ce que** les premiers moyens de refroidissement comprennent un échangeur de chaleur (111, 112) entre les fumées et au moins l'un des fluides comprenant l'eau liquide récupérée dans les premiers moyens (120) de refroidissement ou dans les moyens (130) de déshydratation des fumées, et les composés incondensables des fumées récupérés en entrée des deuxièmes moyens de refroidissement (144).

18. Système selon l'une quelconque des revendications 15 à 17, **caractérisé en ce qu'**il comprend des boucles frigorifiques (210, 220) utilisant des fluides caloporteurs circulant d'une part dans des échangeurs de chaleur (204, 205) présents dans un terminal méthanier pour assurer un échange de chaleur avec du gaz naturel liquéfié soumis à un processus de regazéification et d'autre part dans des échangeurs de chaleur (122, 133, 143) disposés dans l'un au moins des premiers moyens (120) de refroidissement, des moyens (130) de déshydratation et des deuxièmes moyens (140) de refroidissement pour assurer un échange de chaleur avec les fumées donnant lieu à la capture du dioxyde de carbone.

19. Système selon la revendication 18, **caractérisé en ce qu'**il comprend au moins une boucle frigorifique (210) utilisant comme fluide caloporteur de l'eau glycolée et incluant au moins un échangeur de chaleur (122, 133) disposé dans les premiers moyens (120) de refroidissement ou les moyens (130) de déshydratation.

20. Système selon la revendication 18 ou la revendication 19, **caractérisé en ce qu'**il comprend au moins une boucle frigorifique (220) utilisant comme fluide caloporteur du méthane ou de l'azote et incluant au moins un échangeur de chaleur disposé dans les deuxièmes moyens (140) de refroidissement.

21. Système selon la revendication 20, **caractérisé en ce qu'**il comprend en outre au moins une boucle frigorifique utilisant comme fluide caloporteur de l'éthylène ou de l'éthane et incluant au moins un échangeur de chaleur disposé dans les deuxièmes moyens (140) de refroidissement.

22. Système selon l'une quelconque des revendications 15 à 21, **caractérisé en ce qu'**il comprend des moyens (145) de récupération des composés incondensables des fumées à la sortie des deuxièmes moyens (140) de refroidissement et des moyens (134) d'échange de chaleur avec au moins les moyens (130) de déshydratation des fumées.

23. Système selon l'une quelconque des revendications 15 à 22, **caractérisé en ce que** les moyens (130) de déshydratation des fumées comprennent au moins des première et deuxième enceintes (131, 132) munies d'échangeurs de chaleur (133, 134) et pouvant recevoir des fumées de façon discontinue de manière à assurer chacune à tour de rôle un refroidissement des fumées avec solidification de l'eau contenue dans les fumées sur les parois de l'enceinte concernée et un réchauffement de l'eau solidifiée pour permettre une récupération de l'eau sous forme liquide.

24. Système selon l'une quelconque des revendications 15 à 23, **caractérisé en ce que** les deuxièmes moyens (140) de refroidissement des fumées et lesdits moyens, de réchauffage comprennent au moins des première et deuxième enceintes (141, 142) munies d'échangeurs de chaleur (143) et pouvant recevoir des fumées de façon discontinue de manière à assurer chacune à tour de rôle un refroidissement des fumées avec anti-sublimation du dioxyde de carbone qui est déposé sur les parois de l'enceinte concernée, et un réchauffement du dioxyde de carbone solidifié pour provoquer la fusion de celui-ci.

25. Système selon l'une quelconque des revendications 15 à 24, **caractérisé en ce qu'**il comprend en outre des moyens (155) de récupération d'oxydes de soufre dans lesdits moyens (141, 142) de réchauffage dans une enceinte fermée.

## Claims

1. A method of capturing the carbon dioxide present in flue-gas, the method comprising the following steps:
a) first cooling of the flue-gas in order to eliminate a fraction of the water present therein by condensation;
b) dehydrating the flue-gas in order to eliminate the residual water;
c) second cooling of the flue-gas by heat exchange so as to bring them to a temperature such that carbon dioxide passes directly from the gaseous state to the solid state by anti-sublimation;
d) after removing the flue-gas, heating the solidified carbon dioxide in a closed enclosure up to the triple point where a liquid phase appears; and
e) drawing off or pumping out the liquid and/or gaseous carbon dioxide to a thermally insulated tank;
the method being **characterized in that** a fraction of the recovered liquid carbon dioxide is recycled, and after expanding to atmospheric pressure, is reinjected during the second cooling step in continuous or intermittent manner in order to be mixed with the flue-gas previously delivered by the dehydration step.

2. A method according to claim 1, **characterized in that** the fraction of the recovered liquid carbon dioxide that is recycled is reinjected during the second cooling step in the form of fine solid particles.

3. A method according to claim 1 or claim 2, **characterized in that** the fraction of the recovered liquid carbon dioxide that is recycled is injected during the second cooling step into the inside of a heat exchanger.

4. A method according to any one of claims 1 to 3, **characterized in that** it further comprises a step of pre-cooling the flue-gas prior to said first cooling step, the pre-cooling step being performed by exchanging heat with at least one of the fluids comprising the liquid water recovered during the first cooling step and the flue-gas dehydration step, and the non-condensable compounds from the flue-gas that are recovered after said second cooling step.

5. A method according to any one of claims 1 to 4, **characterized in that** the first cooling of the flue-gas, the dehydration of the flue-gas, and the second cooling of the flue-gas make use of heat exchange with the flue-gas via cooling loops operating by heat exchange with the liquefied natural gas that is present in a methane terminal for regassification, and that is used as a cold source.

6. A method according to claim 5, **characterized in that** the first cooling of the flue-gas and the dehydration of the flue-gas are performed by exchanging heat with the flue-gas via at least one cooling loop making use of glycol-containing water.

7. A method according to claim 5 or claim 6, **characterized in that** the second cooling of flue-gas makes use of heat exchange with the flue-gas via at least one cooling loop making use of methane or of nitrogen.

8. A method according to claim 7, **characterized in that** the second cooling of flue-gas makes use of heat exchange with the flue-gas via at least one additional cooling loop making use of ethylene or ethane.

9. A method according to any one of claims 1 to 8, **characterized in that** the dehydration of flue-gas includes a step of exchanging heat with the non-condensable compounds from the flue-gas recovered after the second cooling step.

10. A method according to any one of claims 1 to 9, **characterized in that** the step of dehydrating the flue-gas is performed discontinuously with alternation between a step of cooling the flue-gas to solidify water on the walls of a heat exchanger and a step of heating the solidified water in order to enable it to be recovered in liquid form.

11. A method according to claim 10, **characterized in that** the solidified water is heated by exchanging heat with the flue-gas prior to the flue-gas being cooled during the step of cooling flue-gas with water being solidified.

12. A method according to any one of claims 1 to 11, **characterized in that** the second flue-gas cooling step for causing anti-sublimation of the carbon dioxide, and the solidified carbon dioxide heating step are performed discontinuously and in alternation.

13. A method according to claim 12, **characterized in that** the step of heating the solidified carbon dioxide to the triple point at which a liquid phase appears is performed by heat exchange with the flue-gas prior to the flue-gas being cooled during the second cooling step.

14. A method according to any one of claims 1 to 13, **characterized in that** it further includes a step of recovering sulfur oxides contained in the flue-gas by anti-sublimation and reheating to the triple point where a liquid phase of sulfur oxides appears.

15. A system for capturing carbon dioxide present in flue-gas, the system comprising:
a) first cooler means (110, 120) for cooling flue-gas and comprising at least one heat exchanger (122) for eliminating a fraction of the water present in the flue-gas by condensation;
b) flue-gas dehydration means (130);
c) second cooler means (140) for cooling flue-gas and comprising at least one heat exchanger (143) for bringing the flue-gas to a temperature that causes anti-sublimation of the carbon dioxide present in the flue-gas;
d) heater means (141, 142) for heating the solidified carbon dioxide in a closed enclosure in order to cause it to melt; and
e) means (144) for drawing off or pumping the liquid and/or gaseous carbon dioxide to a thermally insulated tank (150);
the system being **characterized in that** it further comprises expander means (152, 153) for expanding a fraction of the recovered liquid carbon dioxide to atmospheric pressure and for reinjecting said fraction of the carbon dioxide into the flue-gas at said second flue-gas cooler means (140).

16. A system according to claim 15, **characterized in that** it includes means for reinjecting said recovered fraction of the liquid carbon dioxide in the form of fine solid particles into the flue-gas.

17. A system according to claim 15 or claim 16, **characterized in that** the first cooler means comprise a heat exchanger (111, 112) between the flue-gas and at least one of the fluids comprising the liquid water recovered in the first cooler means (120) or in the flue-gas dehydration means (130), and the non-condensable compounds of the flue-gas recovered at the inlet to the second cooler means (144).

18. A system according to any one of claims 15 to 17, **characterized in that** it includes cooling loops (210, 220) using heat-transferring fluids flowing firstly in heat exchangers (204, 205) present in a methane terminal for exchanging heat with the liquefied natural gas subjected to a regassification process, and secondly in heat exchangers (122, 133, 143) placed in at least one of the first cooler means (120), the dehydration means (130), and the second cooler means (140) in order to exchange heat with the flue-gas, giving rise to capture of carbon dioxide.

19. A system according to claim 18, **characterized in that** it includes at least one cooling loop (210) using glycol-containing water as its heat-transferring fluid and including at least one heat exchanger (122, 133) disposed in the first cooler means (120) to the dehydration means (130).

20. A system according to claim 18 or claim 19, **characterized in that** it includes at least one cooling loop (220) using methane or nitrogen as its heat-transferring fluid and including at least one heat exchanger disposed in the second cooler means (140).

21. A system according to claim 20, **characterized in that** it further includes at least one cooling loop using ethylene or ethane as its heat-transferring fluid and including at least one heat exchanger disposed in the second cooler means (140).

22. A system according to any one of claims 15 to 21, **characterized in that** it includes means (145) for recovering non-condensable compounds from the flue-gas at the outlet from the second cooler means (140), and means (134) for exchanging heat with at least one of the flue-gas dehydration means (130).

23. A system according to any one of claims 15 to 22, **characterized in that** the flue-gas dehydration means (130) comprise at least first and second enclosures (131, 132) provided with heat exchangers (133, 134) and capable of receiving flue-gas discontinuously so that each of them can act in turn to cool flue-gas and solidify the water contained therein on the walls of the corresponding enclosure, and to heat the solidified water in order to enable it to be recovered in liquid form.

24. A system according to any one of claims 15 to 23, **characterized in that** the second flue-gas cooler means (140) and said heater means comprise at least first and second enclosures (141, 142) provided with heat exchangers (143) and capable of receiving flue-gas discontinuously in such a manner that each of them in turn cools flue-gas with anti-sublimation of the carbon dioxide that is deposited on the walls of the corresponding enclosure, and heats the solidified carbon dioxide in order to cause it to melt.

25. A system according to any one of claims 15 to 24, **characterized in that** it further comprises means (155) for recovering sulfur oxides from said heater means (141, 142) in a closed enclosure.

## Patentansprüche

1. Verfahren zur Rückgewinnung von Kohlendioxid, das in Dämpfen vorhanden ist, umfassend die folgenden Schritte:
a) erstes Abkühlen der Dämpfe, um durch Kondensieren eine Fraktion des Wassers zu entfernen, das in den Dämpfen vorhanden ist,
b) Dehydratisieren der Dämpfe, um das Restwasser zu entfernen,
c) zweites Abkühlen der Dämpfe durch Wärmeaustausch, um die Dämpfe auf eine Temperatur zu bringen, bei der das Kohlendioxid durch Desublimieren direkt vom gasförmigen Zustand in den festen Zustand übergeht,
d) nach Ableiten der Dämpfe, Wiederaufheizen des verfestigten Kohlendioxids in einem geschlossenen Behälter bis zum Tripelpunkt, an dem sich eine flüssige Phase ausbildet, und
e) Abziehen oder Abpumpen des flüssigen und/oder gasförmigen Kohlendioxids in einen thermisch isolierten Tank,
**dadurch gekennzeichnet, daß** ein Teil des rückgewonnenen flüssigen Kohlendioxids recycelt wird und, nach Entspannung bis auf Atmosphärendruck, während des Schritts des zweiten Abkühlens auf kontinuierliche oder diskontinuierliche Weise erneut injiziert wird, um mit den Dämpfen gemischt zu werden, die zuvor aus dem Schritt des Dehydratisierens hervorgegangen sind.

2. Verfahren nach Anspruch 1, **dadurch gekennzeichnet, daß** der Teil des rückgewonnenen flüssigen Kohlendioxids, das recycelt wurde, während des Schritts des zweiten Abkühlens in Form von feinen Feststoffpartikeln erneut injiziert wird.

3. Verfahren nach Anspruch 1 oder Anspruch 2, **dadurch gekennzeichnet, daß** der Teil des rückgewonnenen flüssigen Kohlendioxids, das recycelt wurde, während des Schritts des zweiten Abkühlens direkt im Innern eines Wärmetauschers erneut injiziert wird.

4. Verfahren nach irgendeinem der Ansprüche 1 bis 3, **dadurch gekennzeichnet, daß** es ferner einen Schritt des Vorabkühlens der Dämpfe vor dem Schritt des ersten Abkühlens umfaßt, wobei der Schritt des Vorabkühlens durch Wärmeaustausch mit mindestens einem der Fluide erfolgt, die das flüssige Wasser, das während der Schritte des ersten Abkühlens und des Dehydratisierens der Dämpfe rückgewonnen wurde, und die nicht kondensierbaren Verbindungen der Dämpfe umfassen, die nach dem Schritt des zweiten Abkühlens rückgewonnenen wurden.

5. Verfahren nach irgendeinem der Ansprüche 1 bis 4, **dadurch gekennzeichnet, daß** das erste Abkühlen der Dämpfe, das Dehydratisieren der Dämpfe und das zweite Abkühlen der Dämpfe einen Wärmeaustausch mit den Dämpfen über Kühlkreisläufe herbeiführen, die Kilokalorien mit sich führen, die durch Wärmeaustausch mit dem verflüssigten Erdgas erhalten wurden, das in einem Flüssiggasterminal vorhanden ist, um regasifiziert zu werden.

6. Verfahren nach Anspruch 5, **dadurch gekennzeichnet, daß** das erste Abkühlen der Dämpfe und das Dehydratisieren der Dämpfe einen Wärmeaustausch mit den Dämpfen über mindestens einen Kühlkreislauf herbeiführen, wobei ein glykolhaltiges Wasser eingesetzt wird.

7. Verfahren nach Anspruch 5 oder Anspruch 6, **dadurch gekennzeichnet, daß** das zweite Abkühlen der Dämpfe einen Wärmeaustausch mit den Dämpfen über mindestens einen Kühlkreislauf herbeiführt, wobei Methan oder Stickstoff eingesetzt wird.

8. Verfahren nach Anspruch 7, **dadurch gekennzeichnet, daß** das zweite Abkühlen der Dämpfe einen Wärmeaustausch mit den Dämpfen über mindestens einen zusätzlichen Kühlkreislauf herbeiführt, wobei Ethylen oder Ethan eingesetzt wird.

9. Verfahren nach irgendeinem der Ansprüche 1 bis 8, **dadurch gekennzeichnet, daß** das Dehydratisieren der Dämpfe einen Schritt des Wärmeaustauschens mit den nicht kondensierbaren Verbindungen der Dämpfe umfaßt, die nach dem Schritt des zweiten Abkühlens rückgewonnen wurden.

10. Verfahren nach irgendeinem der Ansprüche 1 bis 9, **dadurch gekennzeichnet, daß** der Schritt des Dehydratisierens der Dämpfe auf diskontinuierliche Weise abwechselnd mit einem Schritt des Abkühlens der Dämpfe, um das Wasser an den Wänden eines Wärmeaustauschers zu verfestigen, und einem Schritt des Aufheizens des verfestigten Wassers, um seine Rückgewinnung in flüssiger Form zu ermöglichen, durchgeführt wird.

11. Verfahren nach Anspruch 10, **dadurch gekennzeichnet, daß** das Aufheizen des verfestigten Wassers durch Wärmeaustausch mit Dämpfen vor deren Abkühlung während des Schritts des Abkühlens der Dämpfe mit Verfestigung des Wassers durchgeführt wird.

12. Verfahren nach irgendeinem der Ansprüche 1 bis 11, **dadurch gekennzeichnet, daß** der Schritt des zweiten Abkühlens der Dämpfe, um ein Desublimieren des Kohlendioxids zu bewirken, und der Schritt des Aufheizens des verfestigten Kohlendioxids abwechselnd auf diskontinuierliche Weise ausgeführt werden.

13. Verfahren nach Anspruch 12, **dadurch gekennzeichnet, daß** der Schritt des Aufheizens des verfestigten Kohlendioxids bis zum Tripelpunkt, an dem sich eine flüssige Phase ausbildet, durch Wärmeaustausch mit Dämpfen vor deren Abkühlen während des Schritts des zweiten Abkühlens der Dämpfe ausgeführt wird.

14. Verfahren nach irgendeinem der Ansprüche 1 bis 13, **dadurch gekennzeichnet, daß** es ferner einen Schritt der Rückgewinnung der Schwefeloxide, die in den Dämpfen enthalten sind, durch Desublimieren und Aufheizen bis zum Tripelpunkt, an dem sich eine flüssige Phase der Schwefeloxide ausbildet, umfaßt.

15. System zur Rückgewinnung von Kohlendioxid, das in Dämpfen vorhanden ist, umfassend:
a) erste Mittel (110, 120) zum Abkühlen der Dämpfe, die mindestens einen Wärmetauscher (122) umfassen, um durch Kondensieren eine Fraktion von Wassers zu entfernen, das in den Dämpfen vorhanden ist,
b) Mittel (130) zum Dehydratisieren der Dämpfe,
c) zweite Mittel (140) zum Abkühlen der Dämpfe, die mindestens einen Wärmeaustauscher (143) umfassen, um die Dämpfe auf eine Temperatur zu bringen, die ein Desublimieren des Kohlendioxids, das in den Dämpfen vorhanden ist, bewirkt,
d) Mittel (141, 142) zum Aufheizen des verfestigten Kohlendioxids in einem geschlossenen Behälter, um dessen Verflüssigung zu bewirken,
e) Mittel (144) zum Abziehen oder Abpumpen des flüssigen und/oder gasförmigen Kohlendioxids in einen wärmeisolierten Tank (150),
**dadurch gekennzeichnet, daß** es ferner Mittel (152, 153) zur Entspannung bis auf Atmosphärendruck eines Teils des rückgewonnenen flüssigen Kohlendioxids und zur erneuten Injektion dieses Teils des Kohlendioxids in die Dämpfe in den zweiten Mittel (140) zum Abkühlen der Dämpfe umfaßt.

16. System nach Anspruch 15, **dadurch gekennzeichnet, daß** es Mittel zum erneuten Injizieren des Teil des rückgewonnenen flüssigen Kohlendioxids in Form von feinen Feststoffpartikeln in die Dämpfe umfaßt.

17. System nach Anspruch 15 oder Anspruch 16, **dadurch gekennzeichnet, daß** die ersten Mittel zum Abkühlen einen Wärmeaustauscher (111, 112) zwischen den Dämpfen und mindestens einem der Fluide, die das rückgewonnene flüssige Wasser in den ersten Mitteln (120) zum Abkühlen oder in den Mitteln (130) zur Dehydratisieren der Dämpfe umfassen, und den nicht kondensierbaren Verbindungen der Dämpfe, die am Einlaß der zweiten Mittel zum Abkühlen (144) rückgewonnen wurden, umfassen.

18. System nach irgendeinem der Ansprüche 15 bis 17, **dadurch gekennzeichnet, daß** es Kühlkreisläufe (210, 220) umfaßt, die Wärmeübertragungsfluide verwenden, die einerseits in den Wärmeaustauschern (204, 205), die in einem Flüssiggasterminal vorhanden sind, um einen Wärmeaustausch mit dem verflüssigten Erdgas zu gewährleisten, das einem Regasifizierungsvorgang unterzogen wird, und andererseits in den Wärmeaustauschern (122, 133, 143) zirkulieren, die in mindestens einem der ersten Mittel (120) zum Abkühlen, der Mittel (130) zum Dehydratisieren und der zweiten Mittel (140) zum Abkühlen angeordnet sind, um einen Wärmeaustausch mit den Dämpfen zu gewährleisten, der zur Gewinnung des Kohlendioxids führt.

19. System nach Anspruch 18, **dadurch gekennzeichnet, daß** es mindestens einen Kühlkreislauf (210) umfaßt, der als Wärmeübertragungsfluid ein glykolhaltiges Wasser verwendet und mindestens einen Wärmeaustauscher (122, 133) enthält, der in den ersten Mitteln (120) zum Abkühlen oder den Mitteln (130) zum Dehydratisieren angeordnet ist.

20. System nach Anspruch 18 oder Anspruch 19, **dadurch gekennzeichnet, daß** es mindestens einen Kühlkreislauf (220) umfaßt, der als Wärmeübertragungsfluid Methan oder Stickstoff verwendet und mindestens einen Wärmeaustauscher enthält, der in den zweiten Mitteln (140) zum Abkühlen angeordnet ist.

21. System nach Anspruch 20, **dadurch gekennzeichnet, daß** es ferner mindestens einen Kühlkreislauf umfaßt, der als Wärmeübertragungsfluid Ethylen oder Ethan verwendet und mindestens einen Wärmeaustauscher enthält, der in den zweiten Mitteln (140) zum Abkühlen angeordnet ist.

22. System nach irgendeinem der Ansprüche 15 bis 21, **dadurch gekennzeichnet, daß** es Mittel (145) zur Rückgewinnung der nicht kondensierbaren Verbindungen der Dämpfe am Auslaß der zweiten Mittel (140) zum Abkühlen und Mittel (134) zum Wärmeaustausch mit mindestens den Mitteln (130) zum Dehydratisieren der Dämpfe umfaßt.

23. System nach irgendeinem der Ansprüche 15 bis 22, **dadurch gekennzeichnet, daß** die Mittel (130) zum Dehydratisieren der Dämpfe mindestens erste und zweite Behälter (131, 132) umfassen, die mit Wärmeaustauschern (133, 134) ausgestattet sind und die Dämpfe auf diskontinuierliche Weise aufnehmen können, um jeweils abwechselnd ein Abkühlen der Dämpfe mit Verfestigung des in den Dämpfen enthaltenen Wassers an den Wänden des betrachteten Behälters und ein Aufheizen des verfestigten Wassers zu gewährleisten, um eine Rückgewinnung des Wassers in flüssiger Form zu ermöglichen.

24. System nach irgendeinem der Ansprüche 15 bis 23, **dadurch gekennzeichnet, daß** die zweiten Mittel (140) zum Abkühlen der Dämpfe und die Mittel zum Aufheizen mindestens erste und zweite Behälter (141, 142) umfassen, die mit Wärmeaustauschern (143) ausgestattet sind und die Dämpfe auf diskontinuierliche Weise aufnehmen können, um jeweils abwechselnd ein Abkühlen der Dämpfe mit Desublimieren des Kohlendioxids, das an den Wänden des betrachteten Behälters abgeschieden ist, und ein Aufheizen des verfestigten Kohlendioxids zu gewährleisten, um dessen Fusion zu bewirken.

25. System nach irgendeinem der Ansprüche 15 bis 24, **dadurch gekennzeichnet, daß** es ferner Mittel (155) zur Rückgewinnung von Schwefeloxiden in den Mitteln (141, 142) zum Aufheizen in einem geschlossenen Behälter umfaßt.
